# EUROPÄISCHE PATENTSCHRIFT

(11) **EP 1 099 367 B1**
(45) Veröffentlichungstag und Bekanntmachung des Hinweises auf die Patenterteilung: **16.03.2005**
(21) Anmeldenummer: 00123785.8
(22) Anmeldetag: 02.11.2000
(51) Int. Cl.: A01F 15/07

(54) **Hüllmittelzufuhrvorrichtung**
Supply device for wrapping material
Dispositif d'alimentation de gaine pour enrubannage

(30) Priorität: 30.11.1999 US 452072; 12.11.1999 US 439935
(43) Veröffentlichungstag der Anmeldung: 16.05.2001
(73) Patentinhaber: DEERE & COMPANY, Moline, Illinois 61265-8098 (US)
(72) Erfinder: Anstey, Henry Dennis, Ottumwa, IA 51501 (US); Phillips, Kenneth Graig, Ottumwa, IA 52501 (US); Viaud, Jean, 70100 Gray (FR)
(74) Vertreter: Magin, Ludwig Bernhard

(56) Entgegenhaltungen:
- EP-A- 0 807 380
- EP-A- 0 931 449
- US-A- 5 216 873
- US-A- 6 050 052

## Beschreibung

Die Erfindung betrifft eine Hüllmittelzufuhrvorrichtung für eine Presse mit wenigstens einer Hüllmittelzufuhrrolle und einer Trennvorrichtung mit einem Trennelement, das zwischen einer Wartestellung auf einer Seite einer Bewegungsbahn des Hüllmittels und einer Trennstellung auf der anderen Seite der Bewegungsbahn stromabwärts der Hüllmittelzufuhrrolle bewegbar ist.

Aus der US-A-4,787,193 ist eine Netzbindevorrichtung an der Rückseite einer Rundballenpresse bekannt, die zwei Netzzufuhrrollen und eine stromabwärts davon vorgesehene Schneidvorrichtung aufweist. Während des Wickelvorgangs wird Netz von einem sich in der Rundballenpresse drehenden Ballen abgezogen und erstreckt sich zwischen den Netzzufuhrrollen hindurch entlang einer Bewegungsbahn. Die Schneidvorrichtung weist ein auf einem Kreisbogen schwenkbares Messer auf, das die Bewegungsbahn kreuzen kann und das Hüllmittel trennt. Das Hüllmittel besteht aus einem netzartigen Gewebe mit einzelnen Fasern, was bewirkt, daß nach dem Trennvorgang einzelne Faser länger oder kürzer sind und herabhängen.

Das der Erfindung zugrunde liegende Problem wird darin gesehen, daß sehr lange Fasern bei einem späteren Verlauf des Netzes zu Wickelproblemen führen können.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird das in der Hüllmittelzufuhrvorrichtung verbleibende lose Ende des Hüllmittels im Falle einer Abstreifvorrichtung davon abgehalten, sich um die Hüllmittelzufuhrvorrichtung zu wickeln. Im Falle einer Haltevorrichtung wird das lose Ende mit seinen losen Fasern gehalten, so daß bei der anschließenden Hüllmittelzufuhr eine doppelte Lage an Hüllmittel entsteht, die eine gerade, glatte vordere Kante bildet, von der keine Fasern herabhängen. Sobald das Hüllmittel in den Ballenpreßraum hineingezogen wird, wird das Ende aus der Haltevorrichtung gezogen. Das Ende wird mittels des Trennelements an die entsprechende Stelle bewegt. Die Haltevorrichtung steht allgemein für jeden Zusammenbau, der geeignet ist, das Hüllmittel zu halten, und kann auf verschiedene Weise ausgebildet werden, unter anderem als Klemmleiste, Klebestreifen, Halteleiste oder dergleichen. Bei dem Trennelement kann es sich um einen beweglichen Anschlag, ein Gegenmesser oder ein Messer handeln. Die Haltevorrichtung und die Abstreifvorrichtung können in gleicher Weise ausgeführt werden. Die Trennvorrichtung steht für jedweden Zusammenbau, der geeignet ist, das Hüllmittel zwischen der Hüllmittelzufuhrrolle und der Ballenbildungskammer der Presse zu durchtrennen.

Eine einfache, flexible und ausreichend gut haltende Haltevorrichtung kann aus Borsten gebildet werden, insbesondere, wenn diese in Reihen zu einer Bürste zusammengefaßt sind. Die Borsten können je nach Anzahl der Reihen das Hüllmittel leicht zwischen sich aufnehmen und eine ausreichende Klemmkraft ausüben.

Die Abstreifwirkung der Borsten ist dann sehr hoch, wenn die Borsten fest oder annähernd fest und nahe an der zugeordneten Hüllmittelzufuhrrolle angeordnet sind.

Eine von der Presse weggeneigte Anordnung zweier Hüllmittelzufuhrrollen hat den Vorteil, daß sie das Hüllmittel nach oben wegschleudert und dadurch eine beträchtliche Wurfenergie einbringen kann. Wenn sich die Haltevorrichtung unterhalb der Bewegungsbahn und somit auch z. T. unterhalb der Hüllmittelzufuhrrollen befindet, wird das verbleibende Ende des Hüllmittels auch aufgrund der Schwerkraft zielsicher von dem Trennelement zu der Haltevorrichtung befördert.

Das Hüllmittel wird möglichst glatt abgeschnitten, wenn eine Schneide und ein gegen diese arbeitendes Trennelement vorgesehen ist. Das Trennelement hält in seiner Endstellung das Hüllmittel an dem Messer, insbesondere an der zur Schneide führenden Fläche, reibschlüssig und in Verbindung mit der Haltevorrichtung fest.

Das Hüllmittel wird automatisch am Ende des Trennvorgangs in die Haltevorrichtung eingefügt, wenn diese sich zwischen dem Messer und der benachbarten Hüllmittelzufuhrrolle erstreckt.

Die Bewegung des Hüllmittels erfolgt ungebremst, wenn es tangential abgeschleudert wird, wobei die Tangente rechtwinklig zu einer die Drehachsen beider Hüllmittelzufuhrrollen verbindenden Linie verläuft.

In der Zeichnung ist ein nachfolgend näher beschriebenes Ausführungsbeispiel der Erfindung dargestellt. Es zeigt:
- Fig. 1: eine Presse mit einer Hüllmittelzufuhrvorrichtung in Seitenansicht,
- Fig. 2: die Hüllmittelzufuhrvorrichtung aus Figur 1 in vergrößerter Darstellung in einer Seitenansicht von links und
- Fig. 3: einen Ausschnitt der Hüllmittelzufuhrvorrichtung in vergrößerter, perspektivischer und auseinandergezogener Darstellung.

Vorab wird bemerkt, daß verschiedene Komponenten so beschrieben werden, als würden sie als Paar existieren, während nur eine gezeigt ist, und dies ist so zu verstehen, daß die fehlende Komponente im Aufbau gleich oder ähnlich ist mit der gezeigten. Des weiteren sind die Begriffe "rechts" und "links" in Bezug auf den Blickpunkt einer Person gewählt, die hinter dem beschriebenen Gerät steht und in dessen Vorwärtsbewegungsrichtung schaut.

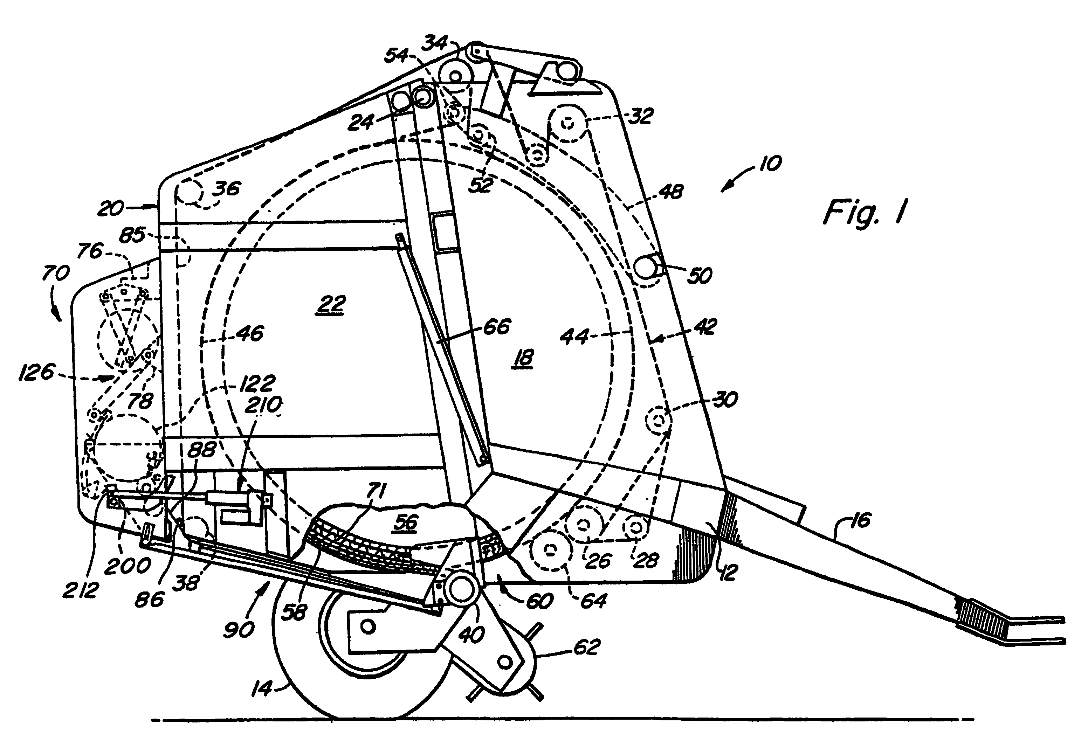

In Figur 1 ist eine Presse 10 des Typs gezeigt, mit dem große zylindrische Ballen hergestellt werden und der gewöhnlich als große Rundballenpresse bezeichnet wird. Die Presse 10 enthält einen Hauptrahmen 12, der sich auf einem Paar Räder 14 abstützt. Der Hauptrahmen 12 besitzt eine Deichsel 16, die an ihn angeschlossen und so ausgebildet ist, daß sie zum Ziehen an ein nicht gezeigtes Zugfahrzeug, z. B. einen Ackerschlepper, angeschlossen werden kann. Ein Paar vertikaler Seitenwände 18, die in der Querrichtung einen Abstand zueinander aufweisen, sind mit dem Hauptrahmen 12 verbunden und weisen entsprechende aufrechte rückwärtige Enden auf. Ein Ballenauslaßgatter 20 mit sich gegenüberliegenden Seitenwänden 22 ist an der Stelle 24 vertikal schwenkbar an obere rückwärtige Stellen der Seitenwände 18 angeschlossen, wobei die Seitenwände 22 aufrechte vordere Enden aufweisen, die an den rückwärtigen Enden der Seitenwände 18 anliegen, wenn sich das Ballenauslaßgatter 20 in seiner gezeigten unteren geschlossenen Stellung befindet.

Eine Vielzahl von Rollen, auf denen Riemen zum Bilden von Ballen aufliegen und deren gegenüberliegende Enden drehbar in nicht gezeigten Lagern von den Seitenwänden 18, 22 getragen werden, ist im Umfang der Seitenwände 18 und 22 angeordnet und erstreckt sich zwischen diesen. Im einzelnen sind beginnend an einer unteren mittigen Stelle und entgegen dem Uhrzeigerdrehsinn zu einer oberen rückwärtigen Stelle der Seitenwände 18 verlaufend, eine angetriebene Rolle 26, eine untere vordere Rolle 28, eine vordere dazwischen gelegene Rolle 30, eine obere vordere Rolle 32 und eine obere rückwärtige Rolle 34 vorgesehen. Fährt man von einer oberen rückwärtigen Stelle der Seitenwände 22 des Ballenauslaßgatters 20 aus entgegen der Uhrzeigerdrehrichtung fort, dann ist dort eine obere rückwärtige Rolle 36, eine untere rückwärtige Rolle 38 und eine untere vordere Rolle 40 vorgesehen. Zwischen den Paaren Seitenwände 18, 22 und nebeneinander auf den verschiedenen Rollen 24, 26, 28, 32 bis 40 abgestützt befindet sich eine Vielzahl endloser Riemen 42 zum Bilden von Ballen. Mit der Ausnahme einiger der Riemen 42, die die untere vordere Rolle 28 überspringen, sind die Riemen 42 derart angeordnet, daß sie nacheinander mit den Rollen 26, 28, 30, 32, 36, 38, 40 und 34 in Eingriff geraten. Ein vorderes Trum 44 der Riemen 42 erstreckt sich von der angetriebenen Rolle 26 aufwärts zu der Rolle 34. In gleicher Weise erstreckt sich ein rückwärtiges Trum 46 der Riemen 42 von der vorderen unteren Rolle 40 in dem Ballenauslaßgatter 20 aufwärts zu der Rolle 34. Vordere und rückwärtige Umlenkrollen 52, 54 mit einem geringen Abstand zwischen sich sind zwischen den rückwärtigen Endbereichen eines Paars sich nach hinten erstreckender Spannarme 48, die an der Stelle 50 in halber Höhe an der Vorderseite der Seitenwände 18 vertikal schwenkbar angebracht sind, angeordnet, wobei die Trume 44 und 46 mit den Seitenwänden 18 und 22 zusammenwirken, um eine ausdehnbare Preß- oder Ballenbildungskammer 56 zu definieren, die an ihrer Oberseite von den Umlenkrollen 52, 54 geschlossen wird, und die hier in dem Zustand einer beträchtlichen Ausdehnung und mit einem Ballen 58 gezeigt ist. Wenn die Ballenbildungskammer 56 leer ist, konvergieren die Trume 44 bzw. 46 von der angetriebenen Rolle 26 und der vorderen Rolle 40 in dem Ballenauslaßgatter 20 aus nach oben und verlaufen nahe aneinander zwischen den Umlenkrollen 52, 54, wobei das Trum 44 eine rückwärtige Oberfläche der vorderen Umlenkrolle 52 und das Trum 46 die vordere Oberfläche der rückwärtigen Umlenkrolle 54 berührt, so daß die Ballenbildungskammer 56 von der Seite gesehen eine Keilform einnimmt. Der Bodenbereich der Ballenbildungskammer 56 ist mit einem Guteinlaß 60 versehen, der sich zwischen der angetriebenen Rolle 26 und der unteren vorderen Rolle 40 in dem Ballenauslaßgatter 20 erstreckt. Erntegut wird mittels einer Pick-up 62 in den Guteinlaß 60 eingespeist, damit es zu einem Ballen, z. B. dem Ballen 58, aufgerollt wird, und zwar infolge der Wirkung der vorderen und rückwärtigen Trume 44 und 46, die jeweils so angetrieben werden, daß sie sich zu dem Guteinlaß 60 hin- bzw. von diesem wegbewegen, wie anfänglich auch der einer Starterrolle 64, die in den Seitenwänden 18 drehbar aufgenommen ist, und zwar nahe zu der angetriebenen Rolle 26 und in derselben Richtung wie diese angetrieben, so daß sie derart funktioniert, daß sie Erntegut, das von dem vorderen Trum 44 nach unten mitgenommen wird, abstreift. Während der Ballen 58 gebildet wird, vergrößert sich die Ballenbildungskammer 56 zunehmend bis zu einer vorbestimmten Größe, wie dies dargestellt ist, gegen die Kraft, die in den Riemen 42 von einem Spannsystem aufgebaut wird, das das Paar Spannarme 48 zusammen mit einem Paar nicht gezeigter Spannfedern und einem Paar nicht gezeigter Hydraulikzylinder umfaßt, die zwischen die Seitenwände 18 und die Spannarme 48 eingefügt sind, um sich der Aufwärtsbewegung der Spannarme 48 zu widersetzen, wie dies wohl bekannt ist. Ein Paar von Hydraulikzylindern 66 für das Ballenentladegatter 20 ist vorgesehen, um das Ballenentladegatter 20 um die Stelle 24 in eine offene Stellung nach oben zu schwenken, wenn es gewünscht ist, den Ballen 58 auf den Boden zu entladen.

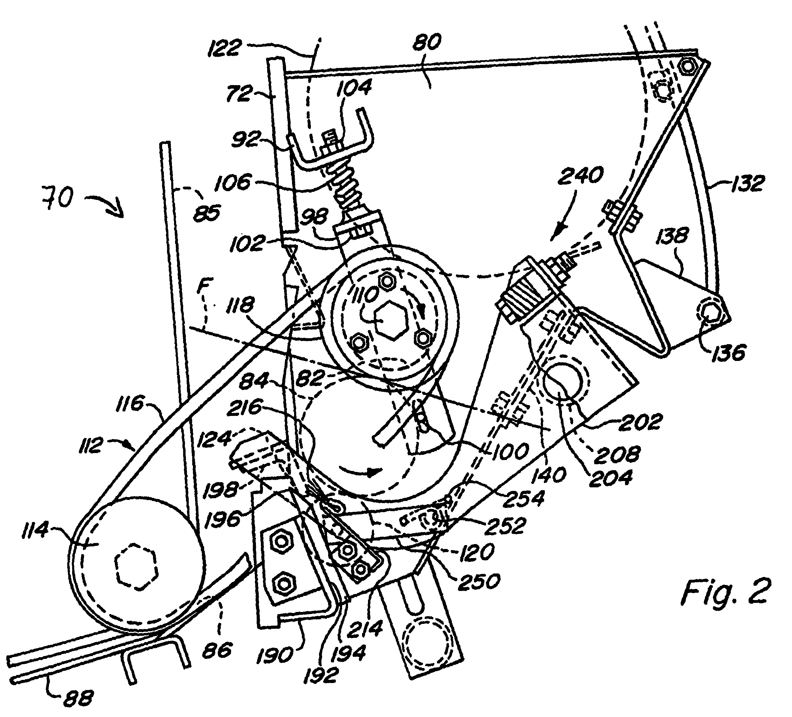

In Figur 2 ist eine Hüllmittelzufuhrvorrichtung 70 gezeigt, die an den unteren rückwärtigen Bereich des Ballenentladegatters 20 angeschlossen ist, um Ballen 58, die in der Ballenbildungskammer 56 gebildet werden, vor der Ablage auf dem Boden zu umwickeln. Es wird bemerkt, daß die Hüllmittelzufuhrvorrichtung 70 so ausgebildet ist, daß sie eine Hüllmittelbahn, insbesondere eine Netzbahn, abgibt, deren Breite größer ist als die der Ballenbildungskammer 56, um in einer solchen nicht näher beschriebenen Weise in die Ballenbildungskammer 56 eingeführt zu werden, daß die Hüllmittelbahn über die Endkanten des Ballens 58 gewickelt wird, wie dies an der Stelle 71 in Figur 1 gezeigt ist. Als Hüllmittel kommt Netz, Folie oder dergleichen in Frage. Im einzelnen enthält die Hüllmittelzufuhrvorrichtung 70 einen Tragrahmen, der an die rückwärtige untere Hälfte des Ballenentladegatters 20 montiert ist und eine vertikale querverlaufende Wand 72 enthält, die sich quer zwischen vertikalen Flanschen erstreckt und an diesen befestigt ist, die rückwärtige Enden der sich gegenüberliegenden Seitenwände 22 des Ballenauslaßgatters 20 bilden. Die Wand 72 besitzt ein oberes Ende, das von einem sich nach unten und hinten erstreckenden nicht gezeigten Flansch gebildet wird. Quer verlaufende Schenkel eines Paares von Haltern 76 zum Tragen von Hebeln und als Winkel ausgebildet, sind an obere rechte und linke Bereiche der Wand 72 unterhalb des Flansches angeschraubt. Ein Paar ebenfalls als Winkel ausgebildete Halter 78 für Spannarme ist mit einem Abstand vertikal unterhalb des Paars Halter 76 vorgesehen, und sie besitzen quer verlaufende Schenkel, die an die Wand 72 angeschraubt sind. Der tragende Aufbau der Hüllmittelzufuhrvorrichtung 70 enthält ferner ein Paar sich längs erstreckender vertikaler Tragwände 80, die von der Seite betrachtet ungefähr eine dreiecksförmige Form einnehmen, und vordere vertikale Seiten, die von quer verlaufenden Flanschen definiert werden, die einen unteren Teil der Wand 72 überlappen und an den Aufbau an dem Ende des Ballenentladegatters 20 z. B. mittels nicht gezeigter geschraubter Befestiger gesichert sind, um so in der Querrichtung einen Abstand zueinander aufzuweisen, der größer ist, als der Abstand zwischen den Seitenwänden 22 des Ballenentladegatters 20, d. h. größer als die Breite der Ballenbildungskammer 56.

Obere und untere Hüllmittelzufuhrrollen 82, 84 erstrecken sich zwischen den Tragwänden 80 und werden mit ihren Enden in von diesen getragenen Lagern drehbar gehalten, wobei sich die Drehachse der Hüllmittelzufuhrrolle 82 oberhalb und rückwärtig der der Hüllmittelzufuhrrolle 84 befindet, so daß eine ebene Hüllmittelflugbahn F an dem Spalt zwischen und tangential zu den Hüllmittelzufuhrrollen 82, 84 verläuft und sich von dem Spalt aus nach oben und vorne und unter die Wand 72 erstreckt. Mit Bezug auf Figur 2 ist zu erkennen, daß die Flugbahn F ein vertikales Trum 85 der Riemen 42 schneiden würde, das sich zwischen der oberen und der unteren Rolle 36 bzw. 38 erstreckt, und zwar an einem Spalt 86, der von einem Abschnitt 88 einer Wanne zum Führen des Hüllmittels 124, die einen Teil eines Hüllmittelführungszusammenbaus 90 darstellt, und einem Bereich der Riemen 42 gebildet wird, der in Eingriff mit der unteren rückwärtigen Rolle 38 steht.

Die obere Hüllmittelzufuhrrolle 82 ist vorzugsweise aus einem Metallkern gebildet, der mit einem Gummi oder dergleichen mit hoher Reibung versehen ist. Die Hüllmittelzufuhrrolle 82 ist derart angeordnet, daß sie gegen die untere Hüllmittelzufuhrrolle 84 vorgespannt ist, so daß letztere infolge eines Reibschlusses mit der ersten angetrieben wird. Im einzelnen ist ein U-förmiger und sich quer erstreckender Halter 92 auf die äußere Oberfläche jeder der Wände 80 geschweißt bzw. befestigt. Ein Wellenhalter 98 mit einem Längsschlitz, in dem ein an der nahegelegenen Tragwand 80 befestigter Führungsbolzen 100 aufgenommen wird, befindet sich unterhalb der Halter 92 mit einem nach außen gewandten oberen Endbereich, der sich parallel zu dem Halter 92 erstreckt. Ein Paar Schrauben 102 erstreckt sich jeweils durch das Paar nach außen gewendeter Endbereiche der Wellenhalter 98 und durch die angrenzenden Halter 92, und jede Schraube 102 wird mittels einer Mutter 104, die in deren mit Gewinde versehenen oberen Endbereich aufgenommen ist, in einer eingestellten Stellung gehalten. Eine Schraubenfeder 106 ist auf jeder Schraube 102 angeordnet und zwischen den jeweils einander zugeordneten Halter 92 und Wellenhalter 98 eingespannt. Ein Rollenhalterbolzen 110, der dazu dient, die Hüllmittelzufuhrrolle 82 in einem von dem Wellenhalter 98 getragenen Lager zu halten, erstreckt sich durch eine kreisförmige, nicht gezeigte Öffnung mit Spiel in der angrenzenden Tragwand 80, wobei von den jeweiligen Schlitzen in dem unteren Bereich der Wellenhalter 98 eine Bewegung der Hüllmittelzufuhrrolle 82 zu der unteren Hüllmittelzufuhrrolle 84 hin und von dieser weg zugelassen wird.

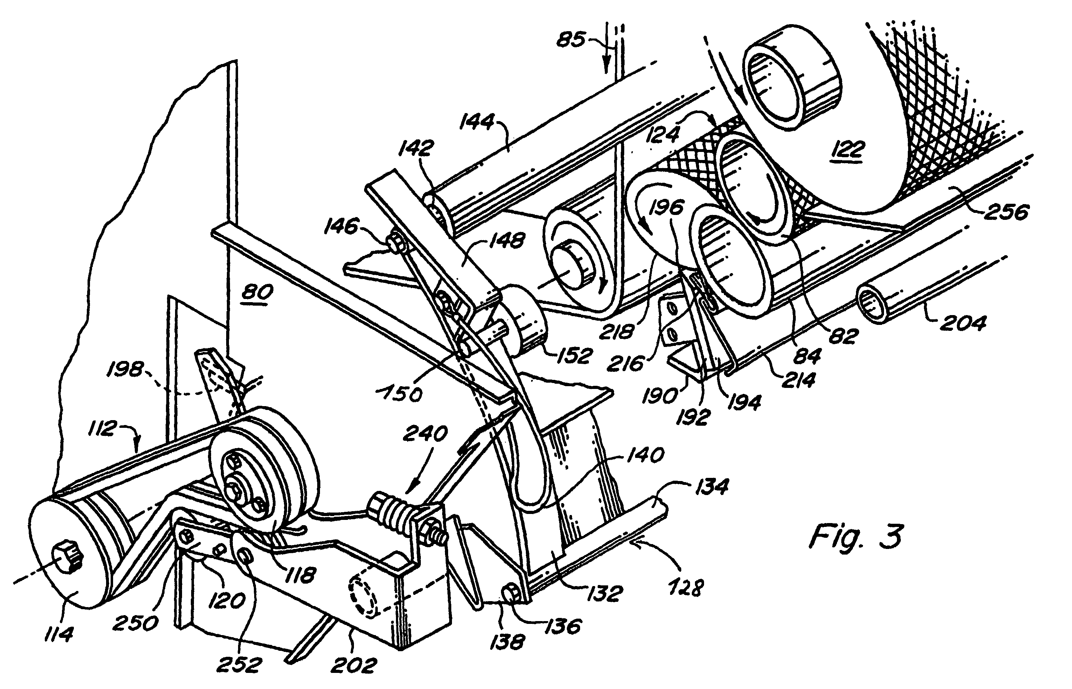

Wie dies in den Figuren 2 und 3 zu sehen ist, ist ein Geschwindigkeitswechselgetriebe 112 mit einer Scheiben-Riemenanordnung vorgesehen, um die obere Hüllmittelzufuhrrolle 82 im Uhrzeigerdrehsinn anzutreiben, was zur Konsequenz hat, daß aufgrund des Reibeingriffs mit der Hüllmittelzufuhrrolle 82 die untere Hüllmittelzufuhrrolle 84 entgegen dem Uhrzeigerdrehsinn gedreht wird, wie dies mit den Pfeilen angezeigt ist. Das Geschwindigkeitswechselgetriebe 112 enthält eine Scheibe 114 mit einer doppelten Nut, die auf eine Welle montiert ist, die als eine Verlängerung der unteren rückwärtigen Rolle 38 angebaut ist, so daß stets eine direkte aber wahlweise veränderbare Beziehung zwischen der Geschwindigkeit der Riemen 42 und der Umfangsgeschwindigkeit der Hüllmittelzufuhrrollen 82 und 84 besteht. Ein Paar Riemen 116 mit einem keilförmigen Profil ist mit der Scheibe 114 und einer Variatorscheibe 118 verbunden, wobei letztere an eine linksseitige Verlängerung der Tragwelle der oberen Hüllmittelzufuhrrolle 82 angeschlossen ist. Es wird bemerkt, daß die Variatorscheibe 118 von bekannter Bauart ist, die zerlegt werden kann, so daß Scheiben hinzugefügt oder entnommen werden können, um die Weite der Nuten, die die Riemen 116 aufnehmen, einstellen zu können. Die Hinzufügung von Scheiben bewirkt größere Nuten mit der Konsequenz, daß die Riemen 116 auf einem kleineren Durchmesser ablaufen und dabei die Geschwindigkeit erhöhen, während eine Entnahme von Scheiben das Verschmälern der Nuten bewirkt mit der Konsequenz, daß die Riemen 116 auf einem größeren Durchmesser ablaufen und dabei die Geschwindigkeit erhöhen. Eine Spannrolle 120 ist in einer nachfolgend beschriebenen Weise so montiert, daß sie wahlweise in Eingriff mit den unteren Trumen der Riemen 116 gebracht werden kann, um diese zu spannen und so eine Antriebsverbindung zwischen der Scheibe 114 und der Variatorscheibe 118 herzustellen, wenn es gewünscht wird, daß Hüllmittel 124 in die Ballenbildungskammer 56 eingespeist wird, um einen Ballen 58 zu binden.

Eine betriebsbereite Hüllmittelrolle 122 zum Abgeben von Hüllmittel 124 ist in einer Lage gezeigt, in der sie sich in Berührung mit der angetriebenen oberen Hüllmittelzufuhrrolle 82 befindet. Ein Streifen von Hüllmittel 124 erstreckt sich von einer unteren vorderen Stelle der Hüllmittelrolle 122 über die rückwärtige Hälfte der oberen Hüllmittelzufuhrrolle 82 und dann durch den Spalt zwischen den Hüllmittelzufuhrrollen 82, 84. Während des Umwickelns eines Ballens 58 in der Ballenbildungskammer 56 verläuft die Bahn des Hüllmittels 124 von den Hüllmittelzufuhrrollen 82, 84 aus weiter und kommt in Anlage mit einem Teil eines oberen vorderen Quadranten der unteren Hüllmittelzufuhrrolle 84 und erstreckt sich in den Spalt 86, der von den Riemen 42 und dem Abschnitt 88 des Hüllmittelführungszusammenbaus 90 gebildet wird. Wie dies weiter unten mehr im Detail behandelt wird, zeigen die Figuren 2 bzw. 3 das Hüllmittel 124, wie es vorläge, nachdem es an einer Stelle zwischen den Hüllmittelzufuhrrollen 82 und 84 und dem Spalt 86 getrennt oder abgeschnitten und der Wickelvorgang gestartet worden ist.

Ein Druckarmzusammenbau 126 ist vorgesehen, um eine annähernd konstante Kraft auf die Hüllmittelrolle 122 aufzubringen, um diese gegen die obere Hüllmittelzufuhrrolle 82 zu drücken, um einen gewünschten Reibwiderstand gegenüber der Kraft aufzubauen, die während der Umwicklung des Ballens 58 dazu tendiert, das Hüllmittel 124 zu ziehen. Der Druckarmzusammenbau 126 enthält getrennte untere und obere Armabschnitte, von denen nur der untere Armabschnitt 128 gezeigt und im Detail beschrieben ist. Der untere Armabschnitt 128 enthält ein Paar Armbereiche 132, die in der Querrichtung einen Abstand zueinander aufweisen und deren erste Endbereiche an eine querverlaufende Stange 134 angeschweißt sind, wobei die Armbereiche 132 für eine vertikale Schwenkbewegung um eine horizontale, quer verlaufende Schwenkachse montiert sind, die von jeweiligen Bolzen 136 definiert wird, die die gegenüberliegenden Enden der Stange 134 an entsprechende Halter 138 anschließen, die an die rückwärtigen Seiten der Tragwände 80 angebracht sind. Die Armbereiche 132 sind aus geformten Streifen oder schmalen Platten gebildet, die geringfügig gebogen oder gekrümmt sind, so daß sie nach oben konkav sind, um eine neue Rolle von Hüllmittel 124 aufzunehmen, wenn sich der untere Armabschnitt 128 in seiner abgesenkten, sich rückwärts erstreckenden Ladestellung befindet, in der er von einem Paar flexibler Tragteile 140, hier in der Form von Kabeln oder Seilen gehalten wird. An das freie Ende jedes Armbereichs 132 ist eine Büchse 142 angeschweißt. Eine Druckrolle 144 erstreckt sich zwischen den Büchsen 142 und ist mittels entsprechender Lagerzusammenbauten mit Schrauben 146 drehbar in diesen gehalten. Die Druckrolle 144 greift an einer Stelle an dem Umfang der Hüllmittelrolle 122 an, die sich ungefähr diametral gegenüber dem Kontaktbereich der Hüllmittelrolle 122 mit der oberen Hüllmittelzufuhrrolle 82 befindet. Eine L-förmige Kraftübertragungsplatte 148 ist an jeden Armbereich 132 angeschweißt, um von diesem eine Verlängerung zu bilden, wobei der lange Schenkel des "L" ungefähr mit seinem Mittelbereich an die Büchse 142 angeschweißt ist und der kurze Schenkel des "L" mit seinem Ende an den Armbereich 132 angeschweißt ist. Ein Bolzen 150 ist quer über jeden Armbereich 132 geschweißt, und zwar an dem Verbindungsbereich des kurzen Schenkels der Kraftübertragungsplatte 148 mit dem Armbereich 132. Jeder Bolzen 150 erstreckt sich nach innen über den zugeordneten Armbereich 132 hinaus und nimmt dort eine Halterolle 152 auf, die sich nahe eines Umfangsbereichs der Hüllmittelrolle 122 befindet, um so letztere davon abzuhalten, sich während des Betriebs der Presse 10 nach hinten zu bewegen. Aus Gründen der Kürze ist die Beschreibung des oberen Armbereichs hier weggelassen worden; es reicht aus zu erwähnen, daß er mit einer Spannkraft in Verbindung steht und Rollen enthält, die mit den Kraftübertragungsplatten 148 in Eingriff sind, so daß die Spannkraft auf die Druckrolle 144 und von dort auf die Hüllmittelrolle 122 übertragen wird.

An einen unteren Bereich des Ballenentladegatters 20 unmittelbar unterhalb und vor der unteren Hüllmittelzufuhrrolle 84 befindet sich ein winkelförmiger Messerstützhalter 190, der eine nahe gelegene vertikale Messerbefestigungsoberfläche 192 definiert, die sich quer zwischen den Tragwänden 80 erstreckt. Ein Messer 194 mit einem abgeschrägten oberen Ende, das eine Schneidkante oder Schneide 196 bildet, ist an die Messerbefestigungsoberfläche 192 angebracht. Ein Trennelement 198 ist aus einem Stück Winkelstahl gebildet und erstreckt sich in paralleler Beziehung zu der Schneide 196 und bildet einen Teil eines Abschneidearmzusammenbaus, um wahlweise von einer Wartestellung, in der er über die Schneide 196 in eine Stellung unmittelbar oberhalb der Flugbahn des Hüllmittels 124 angehoben ist, um so zum Beginn des Bindevorgangs einen ungehinderten Weg zu den Trumen 85 der Riemen 42 zu belassen, in eine Schneidstellung bewegt wird, in der einer der Schenkel des Winkelstahls die abgeschrägte Oberfläche berührt, die zu der Schneide 196 führt, wie dies in Figur 2 gezeigt ist. Im einzelnen enthält der Schneidarmzusammenbau rechte und linke sich längs erstreckende einen Querabstand zueinander aufweisende Arme 200 bzw. 202, deren vordere Enden durch das Trennelement 198 miteinander verbunden sind. Die Arme 200 und 202 sind an ihren rückwärtigen Enden mittels einer Schwenkwelle 204 untereinander verbunden, die zum Schwenken in einem Paar zylindrischer Hülsen aufgenommen ist, die jeweils Teile eines Paars von Befestigungsaufbauten 208 bilden, die jeweils an den rückwärtigen Seiten der Tragwände 80 befestigt sind. Wie dies in Figur 1 zu sehen ist, ist ein elektrisch angetriebener umkehrbarer linearer Motor 210 an die rechte Seitenwand 22 des Ballenentladegatters 20 montiert und weist eine Ausgangswelle auf, die an einen Hebelarm 212 angeschlossen ist, der wiederum an dem äußeren Ende der Schwenkwelle 204 befestigt ist. Die Ausgangswelle des Motors 210 befindet sich in einem ausgefahrenen Zustand, wenn sich das Trennelement 198 in seiner angehobenen Wartestellung befindet. Nachdem der Ballen 58 in einer zu beschreibenden Weise mit Hüllmittel 124 umwickelt ist, wird der Motor 210 so beaufschlagt, daß er die Ausgangswelle zurückzieht. Dies führt dazu, daß der Armzusammenbau 200, 202, 204 mit Blick auf Figur 2 entgegen dem Uhrzeigerdrehsinn geschwenkt wird, was darin resultiert, daß sich das Trennelement 198 in seine untere Schneidstellung bewegt und auf seinem Weg die Bahn des Hüllmittels 124 berührt und sie nach unten in Berührung mit der Schneide 196 bringt, wo sie abgeschnitten wird. Ein sauberes und effizientes Abschneiden des Hüllmittels 124 wird dadurch erreicht, daß der Ballen 58 weiter rotiert, so daß das Hüllmittel 124 gespannt wird, während zur gleichen Zeit der Antrieb der Hüllmittelzufuhrrolle 82 abschaltet und diese gebremst wird, wobei das Bremsen als Folge der nach unten gerichteten Bewegung des Armzusammenbaus 200, 202, 204 erfolgt. Im Einzelnen ist an den rückwärtigen Bereich des Arms 202 ein einstellbarer Anschlag angebracht. Die Spannrolle 120 wird an dem Endbereich eines Spannarms 250 getragen, der mittels eines Bolzens 252 schwenkbar an den Arm 202 angebracht und mittels eines Torsionsfederzusammenbaus 254 nach oben vorgespannt ist. Eine nach unten gerichtete Bewegung des Armzusammenbaus resultiert dann darin, daß die Spannung der Riemen 116 beseitigt wird, während der einstellbare Anschlag 240 in Eingriff mit einem nicht gezeigten Bremsklotz gebracht wird, um den Bremsklotz an seinem Aufbau mit einem manuell bedienbaren nicht gezeigten Arm in einen Bremseingriff mit den Riemen 116 zu schwenken. In diesem Ausführungsbeispiel enthält die Trennvorrichtung wenigstens das Messer 194 und das Trennelement 198 mit den jeweiligen Halte- und Betätigungsmitteln.

Zwischen der unteren Hüllmittelzufuhrrolle 84 und der Schneide 196 befindet sich eine Bürste 214 mit Borsten 216, die sich zu der Hüllmittelzufuhrrolle 84 ausdehnen und dieser benachbart sind, und die abgeschrägte Oberfläche des Messers 194, die zu der Schneide 196 führt. Die Bürste 214 stellt mit den Borsten 216 in diesem Ausführungsbeispiel die Haltevorrichtung und zugleich die Abstreifvorrichtung dar. Die Bürste 214 erfüllt zwei Funktionen. Eine Funktion besteht darin, als ein Abstreifer zu wirken, der verhindert, daß am Anfang des Wickelzyklus eine Bahn des Hüllmittels 124 um die Hüllmittelzufuhrrolle 84 gewickelt wird, und die andere Funktion besteht darin, das freie Ende des Endstücks der Bahn des Hüllmittels 124 aufzunehmen, wenn diese unter der Wirkung des Ambosses 198, der gegen das Messer 194 arbeitet, an einer Stelle zwischen den Hüllmittelzufuhrrollen 82, 84 und dem Spalt 86 abgeschnitten wird. Der Zweck der Aufnahme bzw. der Verstrickung mit dem Hüllmittel 124 besteht darin, daß dieses am Anfang des nächsten Wickelzyklus auf sich selbst zurückgefaltet wird, wie dies bei 218 in Figur 3 gezeigt ist, was zu einer doppelten Lage von Hüllmittel 124 führt, die an der voreilenden Kante, die von den Trumen 85 zu dem Spalt 86 frei von losen Fäden gefördert wird, woraufhin das festgehaltene Ende herausgezogen wird. Diese doppelte Lage des Hüllmittels 124 an der vorlaufenden Kante des Hüllmittels 124 gelangt in Eingriff mit einem rückwärtigen Satz nicht gezeigter Spreizrollenabschnitte an den sich gegenüberliegenden Enden der Rolle 38, die nahe des Spalts 86 angeordnet ist. Es wurde festgestellt, daß die doppelte Lage des Hüllmittels 124 zu einer Verstärkung der rückwärtigen Spreizrollenabschnitte und mit einem vorderen Satz nicht gezeigter Spreizrollenabschnitte an den sich gegenüberliegenden Endbereichen der Rolle 40 zu einer Spreizung oder Beibehaltung der Hüllmittelbreite führt, so daß eine ordnungsgemäße Umwicklung des Ballens 58 eintritt. Ferner hat die Bahn Hüllmittel 124 aufgrund des Umschlagens an dem vorlaufenden Ende der Bahn des Hüllmittels 124, was von herabhängenden Fasern befreit, eine geringere Neigung um Spreizvorrichtungen auf den Rollen gewickelt zu werden. Der Aufbau der Spreizrollen ist in der US Patentanmeldung mit der Seriennummer 09/008,515 gezeigt, und auf diese kann Bezug genommen werden, wenn Einzelheiten der Spreizrolle gewünscht werden.

Es wird hier darauf hingewiesen, daß soweit es die Bürste 214 betrifft, die Bürste von irgendeiner Haltevorrichtung ersetzt werden könnte, die in der Lage ist den abgeschnittenen Endbereich der Länge des Netzes 124 leicht zu erfassen. Zum Beispiel könnte mit einer geringfügigen Abänderung der Geometrie des Ambosses 198 nahe des oberen Endes des Messers 194 ein Kniehebelmechanismus vorgesehen werden, der aufgrund des Betriebs des Ambosses 198 bedient wird, so daß ein Halteelement von ihm dazu dient, das Hüllmittel 124 gegen das obere geneigte Ende des Messers 194 zu halten, wobei die Spannung in dem gefalteten vorderen Endbereich des Hüllmittels 124 den Kniehebelmechanismus an den Anfang des Wickelzyklus betätigt und zurücksetzt.

Die vorliegende Erfindung ist nicht auf die Verwendung mit einer Presse 10 beschränkt, in der Hüllmittel 124 in einer Breite zugeführt wird, die die Breite des Ballenpreßraums 56 überschreitet; vielmehr kann die vorliegende Erfindung auch bei einer herkömmlichen Presse 10 mit festem oder variablen Ballenpreßraum und einer Hüllmittelbreite verwendet werden, die im wesentlichen der Ballenbreite entspricht.

## Patentansprüche

1. Hüllmittelzufuhrvorrichtung (70) für eine Presse (10) mit wenigstens einer Hüllmittelzufuhrrolle (84) und einer Trennvorrichtung mit einem Trennelement (198), das zwischen einer Wartestellung auf einer Seite einer Bewegungsbahn des Hüllmittels (124) und einer Trennstellung auf der anderen Seite der Bewegungsbahn stromabwärts der Hüllmittelzufuhrrolle (84) bewegbar ist, **gekennzeichnet durch** eine Haltevorrichtung oder Abstreifvorrichtung im Bereich der Trennstellung des Trennelements (198) und stromabwärts der Hüllmittelzufuhrrolle (84) zur Aufnahme oder Abstreifung des bereitgehaltenen Endbereichs des Hüllmittels (124) nach dem Trennvorgangund während des Beginns des Umhüllungsvorgangs.

2. Hüllmittelzufuhrvorrichtung nach Anspruch 1, **dadurch gekennzeichnet, daß** die Haltevorrichtung Borsten (216), insbesondere einer Bürste (214), aufweist.

3. Hüllmittelzufuhrvorrichtung nach Anspruch 1 oder 2,**dadurch gekennzeichnet, daß** die Borsten (216) an einer der Hüllmittelzufuhrrollen (82) wenigstens annähernd anliegen.

4. Hüllmittelzufuhrvorrichtung nach einem oder mehreren der vorherigen Ansprüche, **dadurch gekennzeichnet, daß** eine obere und eine untere Hüllmittelzufuhrrolle (82, 84) vorgesehen ist, wobei die obere Hüllmittelzufuhrrolle (82) in der Abgaberichtung des Hüllmittels (124) vor der unteren Hüllmittelzufuhrrolle (84) gelegen ist und sich die Haltevorrichtung unterhalb der Bewegungsbahn befindet.

5. Hüllmittelzufuhrvorrichtung nach einem oder mehreren der vorherigen Ansprüche, **dadurch gekennzeichnet, daß** die Trennvorrichtung ein feststehendes Messer (194) mit einer Schneide (196) und das bewegliche Trennelement (198) aufweist, wobei die Schneide (196) einen Abstand zu der Hüllmittelzufuhrrolle (84) aufweist und das Trennelement (198) das Hüllmittel (124) an dem Messer (194) anlegt.

6. Hüllmittelzufuhrvorrichtung nach einem oder mehreren der vorherigen Ansprüche, **dadurch gekennzeichnet, daß** die Borsten (216) in einer Reihe angeordnet sind und sich zwischen dem Messer (194) und der Hüllmittelzufuhrrolle (84) erstrecken.

7. Hüllmittelzufuhrvorrichtung nach einem oder mehreren der vorherigen Ansprüche, **dadurch gekennzeichnet, daß** die Bewegungsbahn anfänglich entlang einer beiden Hüllmittelzufuhrrollen (82, 84) gemeinsamen Tangente verläuft.

## Claims

1. A wrapping material supply device (70) for a baler (10) with at least one wrapping material feed roller (84) and a parting device with a parting element (198) which can be moved between a standby position on one side of the path of movement of the wrapping material (124) and a parting position on the other side of the path of movement, downstream of the wrapping material feed roller (84), **characterized by** a holding device or stripping device in the region of the parting position of the parting element (198) and downstream of the wrapping material feed roller (84) for reception of or stripping the end region of the wrapping material (124) held in readiness after the parting operation and during the beginning of the wrapping operation.

2. A wrapping material supply device according to claim 1, **characterized in that** the holding device comprises bristles (216), in particular of a brush (214).

3. A wrapping material supply device according to claim 1 or 2, **characterized in that** the bristles (216) bear at least approximately on one of the wrapping material feed rollers (82).

4. A wrapping material supply device according to one or more of the preceding claims, **characterized in that** upper and lower wrapping material feed rollers (82, 84) are provided, wherein the upper wrapping material . feed roller (82) is located in the direction of delivery of the wrapping material (124) ahead of the lower wrapping material feed roller (84) and the holding device is located below the path of movement.

5. A wrapping material supply device according to one or more of the preceding claims, **characterized in that** the parting device comprises a fixed knife (194) with a blade (196) and the movable parting element (198), wherein the blade (196) is spaced from the wrapping material feed roller (84) and the parting element (198) presses the wrapping material (124) on to the knife (194).

6. A wrapping material supply device according to one or more of the preceding claims, **characterized in that** the bristles (216) are arranged in a row and extend between the knife (194) and the wrapping material feed roller (84).

7. A wrapping material supply device according to one or more of the preceding claims, **characterized in that** the path of movement initially runs along a tangent common to the two wrapping material feed rollers (82, 84).

## Revendications

1. Dispositif d'alimentation en matériau d'enrubannage (70) pour une presse (10), comportant au moins une bobine de matériau d'enrubannage (84) et un dispositif de coupe avec un élément de coupe (198), qui est mobile entre une position d'attente sur un côté d'une voie de défilement du matériau d'enrubannage (124) et une position de coupe sur l'autre côté de la voie de défilement, en aval de la bobine de matériau d'enrubannage (84), **caractérisé par** un dispositif de retenue ou dispositif de raclage, monté dans la zone de la position de coupe de l'élément de coupe (198) et en aval de la bobine de matériau d'enrubannage (84) et destiné à recevoir ou retirer la zone d'extrémité prête à l'emploi du matériau d'enrubannage (124), après le processus de coupe et pendant le début du processus d'enrubannage.

2. Dispositif d'alimentation en matériau d'enrubannage selon la revendication 1, **caractérisé en ce que** le dispositif de retenue comporte des poils de brosserie (216), plus particulièrement une brosse (214).

3. Dispositif d'alimentation en matériau d'enrubannage selon la revendication 1 ou 2, **caractérisé en ce que** les poils de brosserie (216) sont en contact au moins approximativement avec l'une des bobines de matériau d'enrubannage (82).

4. Dispositif d'alimentation en matériau d'enrubannage selon une ou plusieurs des revendications précédentes, **caractérisé en ce qu'**il est prévu une bobine supérieure et une bobine inférieure (82, 84), la bobine supérieure de matériau d'enrubannage (82) étant disposée, par référence au sens de défilement du matériau d'enrubannage (124), en amont de la bobine inférieure de matériau d'enrubannage (84) et le dispositif de retenue étant situé en dessous de la voie de défilement.

5. Dispositif d'alimentation en matériau d'enrubannage selon une ou plusieurs des revendications précédentes, **caractérisé en ce que** le dispositif de coupe comporte un couteau (194) fixe avec une lame de coupe (196) et l'élément de coupe (198) mobile, la lame de coupe (196) étant disposée à distance de la bobine de matériau d'enrubannage (84) et l'élément de coupe (198) appliquant le matériau d'enrubannage (124) contre le couteau (194).

6. Dispositif d'alimentation en matériau d'enrubannage selon une ou plusieurs des revendications précédentes, **caractérisé en ce que** les poils de brosserie (216) sont ordonnés en une rangée et s'étendent entre le couteau (194) et la bobine de matériau d'enrubannage (84).

7. Dispositif d'alimentation en matériau d'enrubannage selon une ou plusieurs des revendications précédentes, **caractérisé en ce que** la voie de défilement s'étend au début le long d'une tangente commune aux deux bobines de matériau d'enrubannage (82, 84).
